# EUROPÄISCHE PATENTANMELDUNG

(11) **EP 2 320 226 A1**
(43) Veröffentlichungstag der Anmeldung: **11.05.2011**
(21) Anmeldenummer: 10014347.8
(22) Anmeldetag: 05.11.2010
(51) Int. Cl.: G01N 31/22, G01N 21/77

(54) **Deliqueszenz-Feuchteindikator und dessen Verwendung**

(30) Priorität: 05.11.2009 DE 102009052037
(71) Anmelder: Fraunhofer-Gesellschaft zur Förderung der angewandten Forschung e.V., 80686 München (DE)
(72) Erfinder: Sängerlaub, Sven, 04509 Krostitz/Priester (DE)
(74) Vertreter: Pfenning, Meinig & Partner GbR

(57) **Zusammenfassung**

Die Erfindung betrifft einen Feuchteindikator, der eine deliqueszente Substanz, d.h. eine Substanz, die bei Überschreiten ihres Deliqueszenzpunktes eine Lösung bildet sowie mindestens ein Metall beinhaltet, das sich bei Kontaktierung mit der Lösung der deliqueszenten Substanz, nach Überschreiten des Deliqueszenzpunktes, in eine Substanz mit anderer Farbigkeit bzw. eine transparente Substanz umwandelt. Der vorliegende Feuchteindikator ist dabei frei von Komplexbildern. Die vorliegende Erfindung betrifft somit neuartige Indikatoren, die irreversibel, durch einen Farbumschlag das Überschreiten einer definierten relativen Luftfeuchtigkeit (rel. F.) zwischen 0 und 100 % rel. F., einschließlich 100 % rel. F., z.B. bei Kontakt mit flüssigem Wasser, anzeigen.

## Beschreibung

Die Erfindung betrifft einen Feuchteindikator, der eine deliqueszente Substanz, d.h. eine Substanz, die bei Überschreiten ihres Deliqueszenzpunktes eine Lösung bildet sowie mindestens ein Metall beinhaltet, das sich bei Kontaktierung mit der Lösung der deliqueszenten Substanz, nach Überschreiten des Deliqueszenzpunktes, in eine Substanz mit anderer Farbigkeit bzw. eine transparente Substanz umwandelt. Der vorliegende Feuchteindikator ist dabei frei von Komplexbildern. Die vorliegende Erfindung betrifft somit neuartige Indikatoren, die irreversibel, durch einen Farbumschlag das Überschreiten einer definierten relativen Luftfeuchtigkeit (rel. F.) zwischen 0 und 100 % rel. F., einschließlich 100 % rel. F., z.B. bei Kontakt mit flüssigem Wasser, anzeigen.

Als Feuchteindikator ist seit langem Cobalt-(II)-Chlorid bekannt. Im wasserfreien Zustand bildet

Cobalt-(II)-Chlorid blassblaue, hygroskopische Kristalle, während die Hydrate verschiedene Farbigkeiten, je nach Zusammensetzung, aufweisen:
- CoCl₂ ˙ H₂O (blauviolett),
- CoCl₂ ˙ 1,5 H₂O (dunkelblauviolett),
- CoCl₂ ˙ 2 H₂O (rosaviolett),
- CoCl₂ ˙ 4 H₂O (pfirsichblutenrot) ,
- CoCl₂ ˙ 6 H₂O (rosa)

Das aus rosafarbenen wässrigen Lösungen bei 20°C auskristallisierende himbeerrote, monoklinprismatische Cobalt-(II)-chlorid-hexahydrat geht beim Erwärmen unter Abgabe von Kristallwasser zunächst (bei ca. 35°C) in tiefblaue, wasserärmere Hydrate und schließlich in das wasserfreie blassblaue, sublimierbare Cobalt-(II)-chlorid über. An feuchter Luft vollzieht sich der umgekehrte Vorgang. Auf dieser Erscheinung beruht die Verwendung des Cobalt-(II)-chlorids zu wetteranzeigenden Bildern (Wetterblumen, Cobalt-(II)-chlorid getränkte Papiere, die je nach Feuchtigkeitsgehalt der Luft Farbänderungen zwischen blau und rötlich zeigen), zu Feuchtigkeitsindikatoren (z.B. in Blaugel) und Geheimtinten (Römpp Chemie-Lexikon).

Cobalt-Chlorid ist allerdings hoch toxisch, was eine Anwendung vor allem im Lebensmittelbereich unmöglich macht.

Deliqueszente Substanzen absorbieren bei Überschreiten einer definierten rel. F., dem Deliqueszenzpunkt oder Grenzwert, spontan große Mengen Wasserdampf und lösen sich in dem absorbierten Wasser auf. Es bilden sich Lösungen. Unterhalb des Deliqueszenzpunktes absorbieren deliqueszente Substanzen kein oder sehr wenig Wasserdampf und sind fest.

Deliqueszente Substanzen können vereinfacht in drei Gruppen unterteilt werden:
- Stoffe, deren Lösungen basisch oder sauer und die keine Zucker sind,
- Stoffe, deren Lösungen neutral und die keine Zucker sind: verschiedene deliqueszente Salze,
- deliqueszente Zucker.

### Lösen und Transport von Farbstoffen bei Überschreiten einer bestimmten rel. F.:

Die deliqueszente Substanz absorbiert Wasserdampf und bildet eine Lösung. Die Lösung kann Farbstoffe lösen und z.B. von einer Schicht zu einer anderen Schicht transportieren. Dadurch kommt es zu einer visuell sichtbaren Farbänderung.

### Säure-Base-Reaktion

Die deliqueszente Substanz absorbiert Wasserdampf und bildet eine basische oder saure Lösung. Die Lösung reagiert mit einem Säure-Base-Indikator und verursacht dadurch eine Farbänderung des Säure-Base-Indikators.

### Enzymkatalysierte Umsetzung von Zucker

Zucker absorbiert Wasserdampf und bildet eine Zuckerlösung. Der gelöste Zucker wird anschließend durch ein Enzym (Oxidase) oxidiert. Reaktionsprodukte der Oxidation sind eine Säure und Wasserstoffperoxid. Die Säure oder das Wasserstoffperoxid reagiert anschließend mit einem Farbstoff und verursacht dadurch eine Farbänderung bei dem Farbstoff. Mit diesem Mechanismus kann auch Sauerstoff nachgewiesen werden. Er wurde bereits für Sauerstoff-Indikatoren beschrieben und ist daher nicht neu.

In trockener Form, also bei Lagerung unterhalb des Deliqueszenzpunkt, sind die Substanzen bei Umgebungstemperaturen inert. Erst durch die Absorption von Wasserdampf, also bei Lagerung oberhalb des Deliqueszenzpunktes, bilden sich Lösungen aus den Substanzen. Diese Lösungen können Reaktionspartner bei Reaktionen sein, Reaktionen auslösen oder sich wie Flüssigkeiten verhalten, z.B. migrieren und Stoffe lösen.

Deliqueszente Substanzen können als Indikatoren genutzt werden, die das Überschreiten bestimmter relativer Luftfeuchten anzeigen. Dabei werden folgende Eigenschaften der Substanzen genutzt:
- Bei Überschreiten einer stoffspezifischen rel. F. absorbieren deliqueszente Substanzen große Mengen Wasserdampf und bilden Lösungen.
- Lösungen deliqueszenter Substanzen können Reaktionspartner bei Reaktionen sein oder sie können Reaktionen auslösen, z.B. durch ihre katalytische und/oder elektrolytische Wirkung.
- Das Volumen dieser Lösungen ist größer als das Volumen der trockenen deliqueszenten Substanz. Die Lösung kann, durch die Ausdehnung des Volumens, in Kontakt mit anderen Substanzen gelangen, mit denen vor der Ausdehnung kein direkter Kontakt bestand.
- Die Lösungen der deliqueszenten Substanzen sind flüssig. Sie können Oberflächen benetzen und auf ihnen spreiten.
- Lösungen und gelöste Substanzen können migrieren, z.B. von einer Schicht zu einer anderen Schicht.

### Feste Substanzen können nicht migrieren.

Die US 2008/0163673 betrifft eine Vorrichtung zur Indikation der Feuchtigkeitsanzeige, die auf dem Prinzip des Farbumschlags basiert. Dabei kann vorgesehen sein, dass ein deliqueszentes Material bei Überschreiten des Deliqueszenzpunktes mit einem chromogenen Material reagiert, das im Anschluss mit einem vorhandenen Chromophor, der ein Komplexbildner sein kann, einen spezifischen Farbkomplex ergibt und somit das Überschreiten des Deliqueszenzpunktes angezeigt wird.

Ferner ist aus der 1 849 708 ein Feuchtigkeitsindikator bekannt, der einen reflektiven Film aufweist, auf dem ein deliqueszentes Material aufgebracht sein kann. Bei Überschreiten des Deliqueszenzpunktes wird die reflektive, darunter liegende Schicht sichtbar und dient somit zur Bestimmung des Überschreiten des Deliqueszenzpunktes.

Aus der WO 2007/081972 ist ein Feuchteindikator bekannt, der neben einem pH-Indikator eine Säure enthält, die in Abhängigkeit vom Feuchtigkeitsgrad freigesetzt wird.

Ferner ist aus der US 2,214,354 ein Feuchteindikator bekannt, bei dem deliqueszente Salze beim Überschreiten des Deliqueszenzpunktes Farbstoffe freisetzen.

Eine Serie von Patentschriften, die die Verwendung von deliqueszenten Salzen zur Ausbildung von Feuchteindikatoren beschreiben, ist aus den US-Patent-schriften 2,460,065; 2,460,066; 2,460,067; 2,460,068; 2,460,069; 2,460,070; 2,460,071; 2,460,072; 2,460,073; 2,460,074; 2,526,938; 2,580,737 und 2,627,505 bekannt. Ferner sind Feuchteindikatoren bekannt, die auf einem Enzym-katalysierten Farbumschlag beruhen, der von der relativen Luftfeuchtigkeit abhängig ist.

Nachteilig an den zuvor beschriebenen Systemen ist stets, dass sich daraus keine folienförmigen Materialien herstellen lassen können und die zitierten Systeme aufwändig in der Herstellung sind.

Ausgehend hiervon ist es Aufgabe der vorliegenden Erfindung, einen Feuchteindikator bereitzustellen, der sich zur Herstellung von folienförmigen Indikatoren eignet. Zudem soll das Feuchteindikatorsystem einfach zu realisieren sein. Ebenso ist es Aufgabe der vorliegenden Erfindung, Verwendungszwecke eines dementsprechenden Feuchteindikators anzugeben.

Diese Aufgabe wird bezüglich des Feuchteindikators mit den Merkmalen des Patentanspruches 1 sowie bezüglich der Verwendungszwecke mit den Merkmalen des Patentanspruches 14 gelöst. Die weiteren abhängigen Ansprüche stellen dabei vorteilhafte Weiterbildungen dar.

Erfindungsgemäß wird somit ein Feuchteindikator bereitgestellt, der mindestens eine deliqueszente Substanz, die beim Überschreiten ihres Deliqueszenzpunktes eine Lösung bildet, sowie mindestens ein Metall und/oder mindestens ein Halbmetall, das mit der aus der deliqueszenten Substanz gebildeten Lösung unter Bildung einer Substanz, die eine andere Farbe als das Metall bzw. das Halbmetall aufweist und/oder zumindest teilweise transparent ist, reagiert, jedoch keinen Komplexbildner enthält.

Das erfindungsgemäße Konzept, das dem Feuchteindikator zugrunde liegt, ist dabei das folgende:

Eine deliqueszente Substanz nimmt bei Überschreiten des Deliqueszenzpunktes Wasserdampf auf und bildet eine Lösung. Die Lösung kommt anschließend in Kontakt mit einem Metall, z.B. Aluminium, und reagiert mit dem Metall und/oder katalysiert die Reaktion von dem Metall mit einer weiteren Substanz, z.B. mit Sauerstoff. Dabei bildet sich aus dem Metall ein Reaktionsprodukt, z.B. ein Metallhydroxid oder ein Metalloxid. Die Reaktionsprodukte des Metalls haben eine andere Farbe als das Metall vor der Reaktion oder sie sind transparent oder sie sind halbtransparent. Dieser Farbumschlag oder die sich bildende Halbtransparenz oder Transparenz wird genutzt, um das Überschreiten einer bestimmten rel. F. anzuzeigen.

### Vorteile der Lösung

### Beliebiger Farbumschlag:

Bei den meisten beschriebenen Lösungen werden durch die Reaktion des Metalls farbige Schichten oder Farbstoffe im Bindemittel sichtbar. Die Farbstoffe können aus dem gesamten Farbspektrum ausgewählt werden. Für den Feuchteindikator bedeutet dies, dass ein Farbumschlag von der Farbe des Metalls zu jedem beliebigen Farbton möglich ist. Diese Eigenschaft weisen derzeit eingesetzte Feuchteindikatoren nicht auf.

### Beliebige Schriften und Symbole:

Mit den erfindungsgemäßen Feuchteindikatoren können druckbare Systeme hergestellt werden. Damit können beliebige Schriften, Bilder und Symbole gedruckt werden, die bei Überschreiten des Deliqueszenzpunktes sichtbar werden. Mit den druckbaren Systemen können Linienbreiten von unter 1 mm erreicht werden. Diese Eigenschaft weisen derzeit eingesetzte Feuchteindikatoren nicht auf.

### Kombination verschiedener Feuchteindikatoren für verschiedene rel. F.

Es können mehrere Feuchteindikatoren, die bei unterschiedlichen relativen Luftfeuchten einen Farbumschlag aufweisen, auf einem Verpackungsmaterial oder auf einer Einlage oder auf einem Etikett miteinander kombiniert werden. Damit kann die rel. F., der der Indikator ausgesetzt war, über den Farbumschlag der verschiedenen Feuchteindikatoren eingegrenzt bzw. abgestimmt werden. Z.B. kann bei Überschreiten einer bestimmten rel. F. der Farbumschlag eine Zahl sichtbar machen, die dieser rel. F. entspricht. Damit sind maßgeschneiderte Anwendungsmöglichkeiten gegeben.

### Anwendbarkeit der Indikatoren:

Die Folie, die zu Feuchteindikatoren weiterverarbeitet wird, kann direkt als Verpackungsmaterial genutzt werden, oder kann zu Etiketten, z.B. Selbstklebeetiketten, oder Einlagen weiter verarbeitet werden.

### Geringer Materialeinsatz:

Bei dem Einsatz metallischer Schichten, die vorzugsweise 40 bis 100 Nanometer dick sind, können mit sehr wenig Materialeinsatz Feuchteindikatoren hergestellt werden.

### Ökonomische Rolle-zu-Rolle-Prozesse:

Die erfindungsgemäßen Feuchteindikatoren lassen sich durch etablierte Rolle-zu-Rolle-Prozesse, wie z.B. Vakuumbedampfen oder Drucken, herstellen. Dadurch sind die Prozesse besonders ökonomisch und die Herstellung der Feuchteindikatoren ist besonders preiswert.

Die Feuchteindikatoren können als Lebensmittelverpackungen, Verpackungen für technische Produkte, für die Anwendung im Bereich Transport und Logistik, als Sicherheitselement oder als graphisches Element, verwendet werden.

Die rel. F., bei deren Überschreiten der Farbumschlag geschieht, wird als Grenzwert bezeichnet. Der Grenzwert kann durch die Auswahl der aktiven Substanzen im Feuchteindikator eingestellt werden.

Eine bevorzugte Ausführungsform des Feuchteindikators sieht vor, dass die deliqueszente Substanz ausgewählt ist aus der Gruppe bestehend aus Metalloxiden, Metallhydroxiden, Metallacetaten, Metallhalogeniden, Metallhalogenaten, Metallhydrogensulfaten, Metallsulfaten, Metall(di)hydrogenphosphaten, Metallnitraten, Metallcyanaten, Metallchromaten, Metallnitriten, Metallhydrogencarbonaten, Metallcarbonaten, wobei die Metallionen auch ganz oder teilweise durch Ammoniumionen ersetzt sein können, Zuckern und/oder Kombinationen hieraus.

Ferner ist es bevorzugt, wenn das Metall und/oder das Halbmetall ausgewählt ist aus der Gruppe bestehend aus Aluminium, Antimon, Arsen, Blei, Bor, Cadmium, Cer, Chrom, Cobalt, Eisen, Germanium, Kupfer, Silber, Indium, Iridium, Mangan, Magnesium, Molybdän, Nickel, Niob, Platin, Selen, Tantal, Tellur, Yttrium, Vanadium, Wismut, Wolfram, Zinn, Zink und/oder Kombinationen hieraus.

Bevorzugt ist bei den zuvor genannten Ausführungsformen des erfindungsgemäßen Feuchteindikators, dass die mindestens eine deliqueszente Substanz stoffschlüssig mit dem mindestens einen Metall und/oder Halbmetall in Kontakt ist.

Insbesondere ergeben sich Vorteile, wenn die mindestens eine deliqueszente Substanz und das mindestens eine Metall und/oder das Halbmetall auf einem transparenten Trägersubstrat aufgebracht sind, das vorzugsweise eine Kunststofffolie ist.

Das Metall und die deliqueszente Substanz können über verschiedene bevorzugte Möglichkeiten mit dem Trägersubstrat kombiniert werden.

### Möglichkeit 1: Metallschicht

Diese erste bevorzugte Variante des erfindungsgemäßen Feuchteindikators sieht vor, dass das mindestens eine Metall und/oder das Halbmetall in Form einer Metall- und/oder Halbmetallbeschichtung auf zumindest einem Teil der Oberfläche des transparenten Trägersubstrats und die mindestens eine deliqueszente Substanz in Form einer Schicht auf der dem Trägersubstrat abgewandten Seite auf zumindest einem Teil der Oberfläche der Metall- und/oder Halbmetallbeschichtung aufgebracht ist.

Dabei wird eine transparente Folie verwendet, auf der sich eine Metallschicht und/oder Halbmetallschicht befindet. Die Metallschicht und/oder Halbmetallschicht kann eine Barriereschicht eines Verpackungsmaterials sein. Die Metallschicht und/oder Halbmetallschicht wurde vorzugsweise durch Vakuumbeschichtung oder durch Transfermetallisierung aufgebracht und hat vorzugsweise eine Dicke zwischen 1 bis 500 nm, bevorzugt 10 bis 250 nm, insbesondere 40 nm bis 100 nm. Die Metallschicht und/oder Halbmetallschicht ist so dick, dass sie vorzugsweise nicht transparent oder halbtransparent ist. Direkt auf die Metallschicht und/oder Halbmetallschicht wird ein Bindemittel gedruckt, das eine deliqueszente Substanz enthält. Der Aufdruck kann ein Symbol oder ein Schriftzug sein. Das Bindemittel mit deliqueszenter Substanz ist transparent, mindestens halbtransparent.

Auf die Metallschicht mit Aufdruck (Bindemittel mit deliqueszenter Substanz) kann eine weitere Schicht aufgetragen werden, z.B. kann eine Folie (z.B. eine Siegelfolie) aufkaschiert werden oder es kann eine andere Beschichtung, z.B. ein Lack, aufgetragen werden. Die aufgetragene Folie oder die aufgetragene andere Beschichtung kann farbig oder transparent sein. Diese weitere Schicht muss nicht aufgetragen werden. Sie hat z.B. die Funktion, als Siegelschicht und/oder als Schutzschicht für die darunter liegenden Schichten zu fungieren.

In einer ersten Variante dieser Möglichkeit wird diese weitere Schicht direkt auf den Aufdruck (Bindemittel mit deliqueszenter Substanz) aufgetragen.

In Variante 2 wird auf den Aufdruck (Bindemittel mit deliqueszenter Substanz) eine Farbschicht und darauf die weitere Schicht aufgetragen.

Wenn die Schicht mit der deliqueszenten Substanz einer rel. F. ausgesetzt wird, die gleich bzw. größer dem Deliqueszenzpunkt der deliqueszenten Substanz ist, bildet sich eine Lösung aus der deliqueszenten Substanz. Diese Lösung kommt in Kontakt mit dem Metall und/oder Halbmetall und reagiert mit dem Metall und/oder Halbmetall und/oder verursacht eine Reaktion des Metalls und/oder Halbmetalls mit einer weiteren Substanz. Durch die Reaktion des Metalls ändert es, an der Stelle, an der es mit der Lösung in Kontakt ist, seine Farbe oder es wird transparent oder es wird halbtransparent.

An den Stellen, an denen die Lösung keinen Kontakt mit dem Metall hat, bleibt seine ursprüngliche Farbe erhalten.

Der Einsatz von dünnen Metallschichten, die unter 100 nm dick sind, hat, im Vergleich zu Metallfolien, die mehrere Mikrometer dick sind, den Vorteil, dass das Metall an den reagierenden Stellen schneller reagiert und dadurch schneller eine Farbänderung oder Halbtransparenz oder Transparenz aufweist. Zusätzlich muss weniger Material (Metall und deliqueszente Substanz) eingesetzt werden, um einen Feuchteindikator herzustellen.

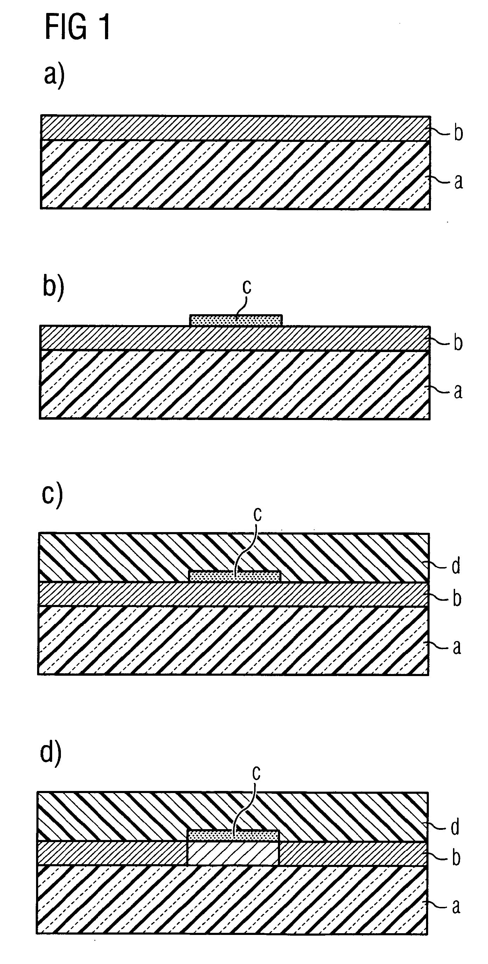

Die Herstellung wird anhand der Figuren 1a bis 1d nachfolgend beschrieben.

In Variante 1 kann alternativ das Trägersubstrat, auf der sich eine Metallschicht und/oder Halbmetallschicht befindet, farbig sein. Direkt auf die Metallschicht und/oder Halbmetallschicht wird ein Bindemittel gedruckt, das eine deliqueszente Substanz enthält. Der Aufdruck kann ein Symbol oder ein Schriftzug sein. Das Bindemittel mit deliqueszenter Substanz ist transparent, mindestens halbtransparent. Auf die Metallschicht mit Aufdruck (Bindemittel mit deliqueszenter Substanz) kann eine weitere, in diesem Fall, transparente oder transluzente Schicht aufgetragen werden, z.B. kann eine Folie (z.B. eine Siegelfolie) aufkaschiert werden oder es kann eine andere transparente oder transluzente Beschichtung, z.B. ein Lack, aufgetragen werden.

### Variante 1: Metallschicht + Bindemittel (mit deliqueszenter Substanz und optional mit Farbstoff) + Beschichtung (optional)

Auf eine Folie (a) wird eine Metallschicht (b) aufgetragen (Fig. 1a).

Auf die Metallschicht (b) wird ein Bindemittel (c) gedruckt, das eine deliqueszente Substanz enthält. Der Druck kann z.B. ein Schriftzug oder ein Symbol sein. Das Bindemittel kann zusätzlich einen Farbstoff enthalten (Fig. 1b).

Auf die Metallschicht (b) mit dem darauf befindlichen Bindemittel (c) mit deliqueszenter Substanz wird eine transparente oder eine farbige Folie oder eine bedruckte Folie (d) kaschiert oder es wird eine andere Beschichtung (d) aufgebracht. Wenn eine bedruckte Folie aufkaschiert wird, soll das Druckbild der aufkaschierten Folie direkt über der verdruckten Mischung aus Bindmittel und deliqueszenter Substanz platziert werden. Die Folie (d) oder andere Beschichtung (d) muss jedoch nicht aufgebracht werden (Fig. 1c).

Bei Überschreiten des Deliqueszenzpunktes der deliqueszenten Substanz in dem Bindemittel (c) absorbiert die Substanz Wasserdampf und bildet eine Lösung. Die Lösung kommt in Kontakt mit der Metallschicht und reagiert mit ihr oder verursacht eine Reaktion der Metallschicht mit einer weiteren Substanz. Dadurch ändert das Metall an dieser Stelle seine Farbe oder das Metall wird an dieser Stelle transparent oder es wird halbtransparent.

Betrachtet man die Folie von der Sichtseite, wird durch die Reaktion der Folienverbund an dieser Stelle die Farbe des reagierten Metalls erhalten, wenn das Metall seine Farbe ändert und nicht transparent wird (Fig. 1d).

Wenn das Metall transparent wird und Folie (a) transparent ist, wird diese Stelle
- transparent, wenn die Folie (d) oder Beschichtung (d) transparent ist und das Bindemittel (c) keinen Farbstoff enthält und wenn eine Folie (d) oder Beschichtung (d) eingesetzt wird,
- die Farbe des Farbstoffs in dem Bindemittel (c) wird sichtbar, wenn das Bindemittel einen Farbstoff enthält oder die farbige Folie (d) oder
- die Farbe in der Beschichtung (d) wird sichtbar, wenn die Folie (d) oder die Beschichtung (d) farbig sind und eine Folie die Folie (d) oder die Beschichtung (d) eingesetzt werden.

Wenn das Metall transparent wird und Folie (a) farbig ist, wird an dieser Stelle
- die Farbe der Folie (a) sichtbar, wenn Folie (d) oder Beschichtung (d) transparent ist und das Bindemittel (c) keinen Farbstoff enthält.

Alternativ können die Schichten in der entgegengesetzten Reihenfolge aufgetragen werden. Auf eine transparente oder eine farbige Folie oder eine bedruckte Folie (d) wird ein Bindemittel (c) mit deliqueszentem Substanz gedruckt. Anschließend wird die Folie (d) auf der Seite mit dem Bindemittel (c) mit deliqueszenter Substanz mit einer Metallschicht bedampft, oder es wird eine Metallschicht transfer-metallisiert. Auf die Seite mit der Metallschicht wird anschließend eine Folie (a) aufkaschiert.

### Variante 2: Metallschicht + Bindemittel (mit deliqueszenter Substanz) + Aufdruck + Beschichtung (optional)

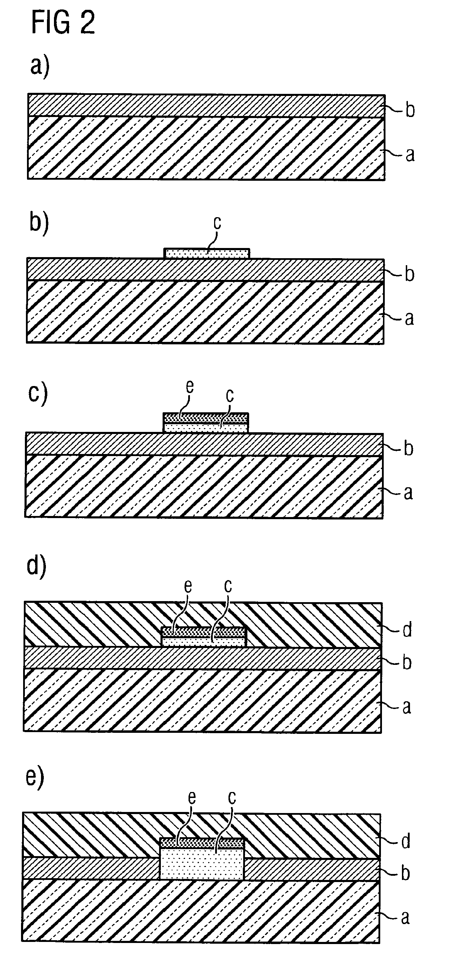

Auf eine Folie (a) wird eine Metallschicht (b) aufgetragen (Fig. 2a).

Auf die Metallschicht (b) wird ein Bindemittel (c) gedruckt, das eine deliqueszente Substanz enthält. Der Druck kann z.B. ein Schriftzug oder ein Symbol sein. Das Bindemittel (c) soll bevorzugt keinen Farbstoff enthalten (Fig. 2b).

Auf das Bindemittel (c) mit der deliqueszenten Substanz wird ein Bindemittel (e) mit einem Farbstoff aufgedruckt (Fig. 2c).

Auf die Metallschicht mit dem Aufdruck (c und e) wird eine Folie (d) kaschiert. Die Folie (d) kann transparent oder farbig sein. Die Folie (d) muss jedoch nicht aufgebracht werden (Fig. 2d).

Bei Überschreiten des Deliqueszenzpunktes der deliqueszenten Substanz in dem Bindemittel (c) absorbiert die Substanz Wasserdampf und bildet eine Lösung. Die Lösung kommt in Kontakt mit der Metallschicht (b) und reagiert mit ihr oder verursacht eine Reaktion der Metallschicht mit einer weiteren Substanz. Dadurch wird diese Stelle transparent oder halbtransparent (Fig. 2e).

Betrachtet man die Folie von der Sichtseite, wird durch die Reaktion bei dem Folienverbund an dieser Stelle der Farbstoff in dem Bindemittel (e) sichtbar.

Alternativ können die Schichten in der entgegengesetzten Reihenfolge aufgetragen werden. Auf eine Folie (d) wird ein Bindemittel (e) mit einem Farbstoff aufgedruckt and anschließend wird ein Bindemittel (c) mit deliqueszenter Substanz darauf gedruckt. Anschließend wird die Folie (d) auf der Seite mit dem Bindemittel (c) mit deliqueszenter Substanz mit einer Metallschicht bedampft, oder es wird eine Metallschicht transfer-metallisiert. Auf die Seite mit der Metallschicht wird anschließend eine Folie (a) aufkaschiert.

In der zuvor beschriebenen ersten Möglichkeit des Feuchteindikators ist es bevorzugt, wenn die Metall- und/oder Halbmetallbeschichtung eine Dicke zwischen 1 und 500 nm, bevorzugt zwischen 10 und 250 nm, besonders bevorzugt zwischen 40 und 100 nm aufweist.

Ferner ist es dabei vorteilhaft, wenn zumindest auf einem Teil der der Metall- und/oder Halbmetallschicht abgewandeten Seite der Schicht der deliqueszenten Substanz eine mindestens einen Farbstoff enthaltende Schicht aufgebracht ist.

### Möglichkeit 2: Metallpartikel und deliqueszente Substanzen in einem Bindemittel

Eine zweite bevorzugte Ausführungsform des Feuchteindikators sieht vor, dass das mindestens eine Metall und/oder Halbmetall in Form von Metall- und/oder Halbmetallpartikeln und/oder Metall- und/oder Halbmetallplättchen zusammen mit der mindestens einen deliqueszenten Substanz in einer einzigen Schicht auf zumindest einem Teil der Oberfläche des transparenten Trägersubstrats aufgebracht sind.

Hierbei ist es insbesondere vorteilhaft, dass die das Metall und/oder das Halbmetall und die deliqueszente Substanz enthaltende Schicht mindestens ein Bindemittel enthält, wobei das Bindemittel bevorzugt ausgewählt ist aus der Gruppe bestehend aus Einkomponenten-Klebstoffen und/oder -Lacken; Zweikomponentenklebstoffen- und/oder -Lacken; UV-, chemisch und/oder thermisch härtbaren Klebstoffen und/oder Lacken, Hotmelts, Silikonen, Polyurethanen, Polyestern, Phenol-Formaldehydharzen, Kautschuken, Epoxiden und/oder Kombinationen hieraus.

Ferner ist die bevorzugte Möglichkeit gegeben, dass zumindest auf einem Teil der dem Trägersubstrat abgewandeten Seite, das mindestens eine Metall und/oder Halbmetall und die mindestens eine deliqueszente Substanz enthaltende Schicht eine mindestens einen Farbstoff enthaltende Schicht aufgebracht ist.

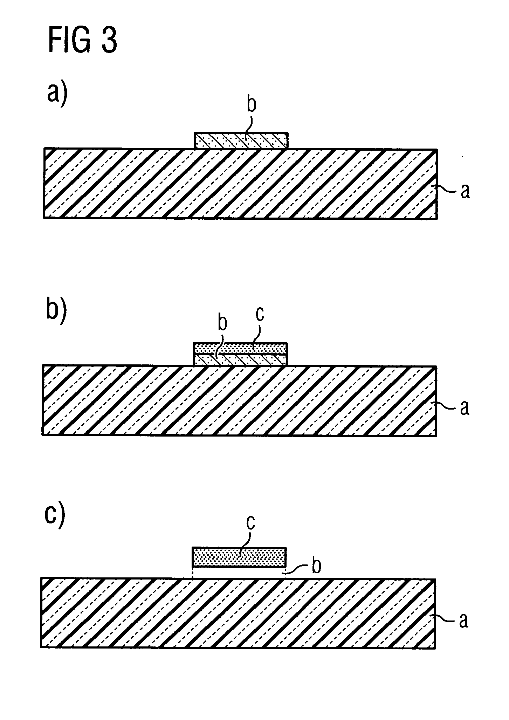

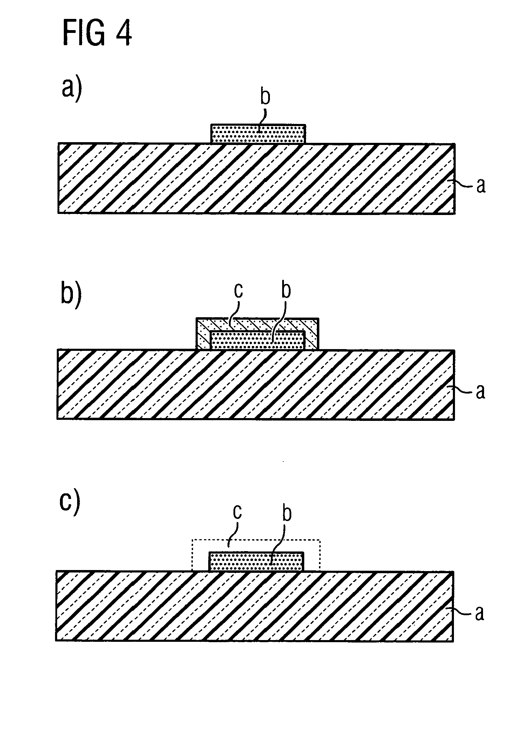

Die bevorzugte Variante der Erfindung wird anhand der nachfolgenden Ausführungen unter Bezugnahme auf die Figuren 3 und 4 ausgeführt.

Metallpartikel, z.B. Metallplättchen oder Metallpigmente, und eine deliqueszente Substanz werden in einem Bindemittel dispergiert. Die Mischung kann zum Beschichten oder zum Verdrucken verwendet werden. Beschichtet bzw. bedruckt werden können transparente und nicht transparente, flächige und starre Körper, z.B. Folien und Becher. Nach der Beschichtung und Aushärtung des Systems liegt es als Schicht vor. Die Schicht hat die Farbe des dispergierten Metalls und ist bevorzugt lichtundurchlässig, da das Metall in dem Bindemittel Licht absorbiert, reflektiert und streut.

Die Mischung wird auf ein Substrat gedruckt und darauf wird ein Bindemittel mit Farbstoff gedruckt (Variante 1), die Mischung wird auf ein bereits verdrucktes Bindemittel mit Farbstoff gedruckt (Variante 2), die Mischung enthält zusätzlich einen Farbstoff (Variante 3) oder die Mischung wird direkt verdruckt und enthält keinen Farbstoff (Variante 4).

Der Druck (Bindemittel mit Metallpartikeln oder Bindemittel mit Farbstoff) kann zusätzlich beschichtet werden, z.B. mit einer Folie oder mit einem Lack. Die Beschichtung kann z.B. als Siegelschicht oder als Schutzschicht dienen.

Wenn die Schicht mit den Metallpartikeln und der deliqueszenten Substanz und optional mit einem Farbstoff einer rel. F. ausgesetzt wird, die gleich bzw. größer als der Deliqueszenzpunkt der deliqueszenten Substanz ist, bildet sich eine Lösung aus der deliqueszenten Substanz. Diese Lösung kommt in Kontakt mit dem Metall und reagiert mit dem Metall oder verursacht eine Reaktion des Metalls wodurch es seine Farbe ändert oder transparent wird oder halbtransparent wird.

Durch diese Reaktion wird die Farbe des farbiges Aufdrucks (Variante 1 und Variante 2) oder die Farbe im Bindemittel sichtbar (Variante 3) oder die Farbe des reagierten Metalls wird sichtbar (Variante 4).

### Variante 1

Eine farbige Schicht wird auf ein Bindemittel mit deliqueszenter Substanz und Metallpigmenten gedruckt.

Auf ein transparentes Substrat (a) wird ein Bindemittel (b) gedruckt, das eine deliqueszente Substanz und Metallpartikel enthält. Diese Schicht (b) soll lichtundurchlässig sein (Fig. 3a).

Auf diese Schicht (b) wird anschließend eine farbige Schicht (c) aufgedruckt, deren Fläche innerhalb der Fläche des Bindemittels liegt (Fig. 3b).

Bei Überschreiten des Deliqueszenzpunktes der deliqueszenten Substanz (in Schicht b) absorbiert sie Wasserdampf und bildet eine Lösung. Die Lösung kommt in Kontakt mit dem Metall (in Schicht b) in dem Bindemittel und reagiert mit dem Metall oder verursacht eine Reaktion des Metalls. Dadurch wird diese Stelle (b) transparent oder halbtransparent. In Folge dessen wird die farbige Schicht (c) sichtbar (Fig. 3c).

### Variante 2

Eine farbige Schicht wird auf ein Bindemittel mit deliqueszenter Substanz und Metallpigmenten gedruckt.

Auf ein transparentes oder nicht transparentes Substrat (a) wird ein Bindemittel mit Farbstoff (b) gedruckt (Fig. 4a).

Auf diese Schicht (b) wird anschließend ein Bindemittel (c) gedruckt, das eine deliqueszente Substanz und Metallpartikel enthält. Diese Schicht soll lichtundurchlässig sein und die Schicht bedecken und eine größere Fläche als die farbige Schicht haben (Fig. 4b).

Bei Überschreiten des Deliqueszenzpunktes der deliqueszenten Substanz absorbiert sie Wasserdampf und bildet eine Lösung. Die Lösung kommt in Kontakt mit dem Metall in dem Bindemittel (Schicht c) und reagiert mit dem Metall oder verursacht eine Reaktion des Metalls. Dadurch wird diese Stelle transparent oder halbtransparent. In Folge dessen wird die farbige Schicht (Schicht b) sichtbar (Fig. 4c).

### Möglichkeit 3: Metallpartikel und deliqueszente Substanz in einem Bindemittel mit Farbstoffschicht

Eine dritte bevorzugte Möglichkeit der Ausführung des Feuchteindikators gemäß der vorliegenden Erfindung sieht vor, dass auf dem Trägersubstrat zumindest teilweise eine mindestens einen Farbstoff enthaltende Schicht sowie darauf zumindest teilweise eine einzige, das mindestens eine Metall und/oder Halbmetall in Form von Metall- und/oder Halbmetallpartikeln und/oder Metall- und/oder Halbmetallplättchen zusammen mit der mindestens einen deliqueszenten Substanz enthaltende Schicht aufgebracht ist.

Das Bindemittel 1 enthält die deliqueszente Substanz, das Bindemittel 2 enthält Metallpartikel, z.B. Metallplättchen oder Metallpigmente. Die Mischungen können zum Beschichten oder zum Verdrucken verwendet werden. Beide Systeme werden übereinander gedruckt bzw. beschichtet. Wenn die Schicht mit der deliqueszenten Substanz (Bindemittel 1) einer rel. F. ausgesetzt wird, die gleich bzw. größer als der Deliqueszenzpunkt der deliqueszenten Substanz ist, bildet sich eine Lösung. Diese Lösung migriert zu den Metallpartikeln in Bindemittel 2 und kommt mit den Metallpartikeln in Kontakt und reagiert mit den Metallpartikeln oder verursacht eine Reaktion des Metalls, wodurch es seine Farbe ändert, transparent oder semitransparent wird. Diese Schichten können wie in Möglichkeit 2 mit farbigen Schichten kombiniert werden oder ohne zusätzliche farbige Schichten angewendet werden.

Die vorliegende Erfindung wird anhand der nachfolgenden Ausführungen näher erläutert und ausgeführt, ohne die Erfindung auf die dargestellten Parameter zu beschränken.

Bevorzugt verwendete Substanzen/Reaktionsprinzipien:
Die Reaktion von Metallen zu Abbauprodukten, z.B. Oxiden und Hydroxiden, wird durch verschiede Reaktionswege hervorgerufen, z.B.:
   - Reaktion mit einer Base,
   - durch elektrolytisch wirkende Substanzen katalysierte Oxidation mit Sauerstoff und Wasserdampf aus der Umwelt.

### Reaktion mit einer Base

Für diesen Mechanismus wird vorzugsweise Aluminium gewählt. Aluminium reagiert mit Basen zu Aluminiumhydroxid.

Al+3OH⁻→Al(OH)₃

Für die Reaktion wird eine Base gewählt, die einen definierten Deliqueszenzpunkt aufweist (siehe nachfolgende Tabelle):

| **Substanz** | **Deliqueszenzpunkt bei 23 °C in [% rel. F.]** |
|---|---|
| Natriumhydroxid | 6 |
| Kaliumhydroxid | 9 |
| Kaliumacetat | 22 |
| Kaliumcarbonat | 43 |
| Natriumacetat | 76 |
| Natriumcarbonat | 92 |

Alternativ können Basen gewählt werden, die bei Kontakt mit flüssigem Wasser basische Lösungen bilden: Calciumoxid, Calciumhydroxid, Magnesiumoxid, Magnesiumhydroxid oder Eisenhydroxid.

Durch die Absorption von Wasserdampf bei rel. F. gleich oder größer dem Deliqueszenzpunkt absorbieren die Basen große Mengen Wasserdampf und bilden Lösungen.

Wenn die Lösungen in Kontakt mit Metallen kommen, können die Metalle mit den Lösungen zu Hydroxiden reagieren. Unterhalb des Deliqueszenzpunktes sind die Basen nicht aktiv.

Die deliqueszenten Basen können mit Salzen kombiniert werden, deren Deliqueszenzpunkt unterhalb des Deliqueszenzpunktes der verwendeten Base liegt. Ist die rel. F. gleich und größer dem Deliqueszenzpunkt des Salzes bildet sich eine Lösung. Diese Lösung kann nun die Base aktivieren, auch wenn die rel. F. kleiner als der Deliqueszenzpunkt der Base ist.

D.h. in den vorher aufgeführten Varianten (Möglichkeiten 1 bis 3) kann es sich bei den deliqueszenten Substanzen auch um Mischungen verschiedener deliqueszenter Substanzen handeln. Der Farbumschlag des Feuchteindikators findet dann bei der relativen Feuchte größer oder gleich des Deliqueszenzpunktes der deliqueszenten Substanz mit dem niedrigeren Deliqueszenzpunkt statt.

### Beispiel

Wird Natriumcarbonat (mit einem Deliqueszenzpunkt von 92 % rel. F.) mit Natriumchlorid (mit einem Deliqueszenzpunkt von 76 % rel. F.) und mit Aluminium gemischt und einer rel. F. von 80 % rel. F. ausgesetzt, nimmt das Natriumchlorid Wasserdampf auf, bildet eine Lösung, die Natriumcarbonat löst und/oder aktiviert, die anschließend mit Aluminium reagiert.

Würde die Mischung kein Natriumcarbonat enthalten, würde diese Reaktion nicht bzw. extrem langsam ablaufen.

Würde die Mischung kein Natriumchlorid enthalten, würde diese Reaktion nicht ablaufen.

### Durch elektrolytisch wirkende Substanzen katalysierte Oxidation von Metallen mit Sauerstoff und Wasserdampf aus der Umwelt

Metalle, besonders unedle Metalle, reagieren mit Sauerstoff und Wasserdampf. Diese Reaktionen werden durch Elektrolyte, z.B. Salzlösungen, katalysiert. Werden als Salze deliqueszente Salze eingesetzt, findet die Reaktion bei Überschreiten des Deliqueszenzpunktes statt. Nachfolgend wird ein Beispiel für die Oxidation von Eisen gezeigt:

Fe+½O₂+H₂O→Fe(OH)₂

Eisen (metallfarben) wird zu Eisenoxid oder Eisenhydroxid oxidiert, die eine braune bis rotbraune Farbe aufweisen.

Aluminium (silbern glänzend) reagiert mit Basen zu weißem Aluminiumhydroxid.

### Farbänderung von metallfarben zu transparent oder halbtransparent:

Dünne Metallschichten in Dicken von wenigen Nanometern sind halbtransparent. Mit zunehmender Schichtdicke sinkt die Transparenz. Bei Schichtdicken ab 40 bis 100 nm sind Metallschichten praktisch lichtundurchlässig. Z.B. weist Aluminium bei einer Dicke von 40 nm eine Lichtdurchlässigkeit von 1/100, bei einer Dicke von 60 nm eine Lichtdurchlässigkeit von 1/1000 und bei einer Dicke von 80 nm eine Lichtdurchlässigkeit von 1/10.000 der eingestrahlten Lichtmenge auf.

Reagieren diese Metallschichten, entstehen Reaktionsprodukte, die
- keine geschlossene Schicht bilden und damit lichtdurchlässig sind und/oder
- eine geringere Lichtabsorption als das nicht reagierte Metall aufweisen und/oder
- die Reaktionsprodukte werden in der Lösung der deliqueszenten Substanz gelöst, diese Lösung ist transparent.

Dadurch erhöht sich die Lichtdurchlässigkeit der reagierten Stellen deutlich. Dadurch werden die Schichten transparent oder mindestens halbtransparent.

### Bemerkungen zum Bindemittel

Das Bindemittel, das der Träger der deliqueszenten Substanz ist, muss die Migration der Lösung der deliqueszenten Substanz zulassen.

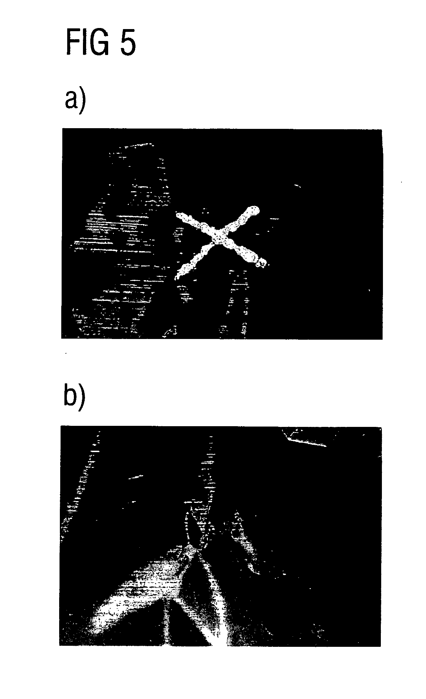

Die nachfolgenden Versuche dienen ebenso der Verdeutlichung der Erfindung und werden unter Bezugnahme auf die beigefügten Figuren 5 bis 12 nachfolgend erläutert.

### Herstellung der Beschichtung:

Im ersten Schritt wurde in Ausführungsfall 1 Kaliumcarbonat (Deliqueszenzpunkt 43 % rel. F.) und in Ausführungsfall 2 Natriumcarbonat (Deliqueszenzpunkt ca. 92 % rel. F.) 2 min mit einem Mörser staubfein gemahlen.

1 g Wachs wurde auf ca. 100 °C erhitzt, bis es sich verflüssigte. Anschließende wurden dem Wachs 2 g der gemahlenen Substanz zugefügt. Im Ausführungsfall 1 2 g Natriumcarbonat und im Ausführungsfall 2 2 g Kaliumcarbonat. Die Substanz wurde mit dem Wachs mit einem Spatel intensiv gemischt. Das flüssige Wachs mit der Substanz wurde anschließend mit einem Spatel auf eine mit Aluminium bedampfte Folie aufgetragen (biaxial orientiertes Polypropylen (Dicke 20 µm) mit aufgedampfter Aluminiumschicht (optische Dichte 1,6)). Der Auftrag erfolgte auf die Aluminiumseite.

### Untersuchung der Indikatorwirkung:

Die Folie mit der Beschichtung Wachs mit Natriumcarbonat wurde bei 50 % rel. F. und 100 % rel. F. für 2 Tage bei 23 °C gelagert.

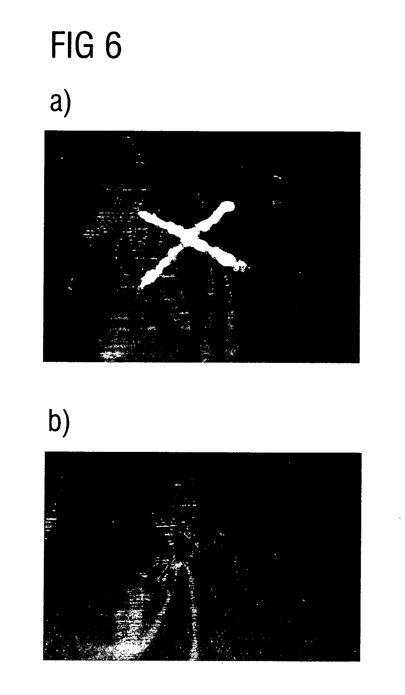

Bei 50 % rel. F. erfolgte keine Reaktion (vgl. Figuren 5 und 6).

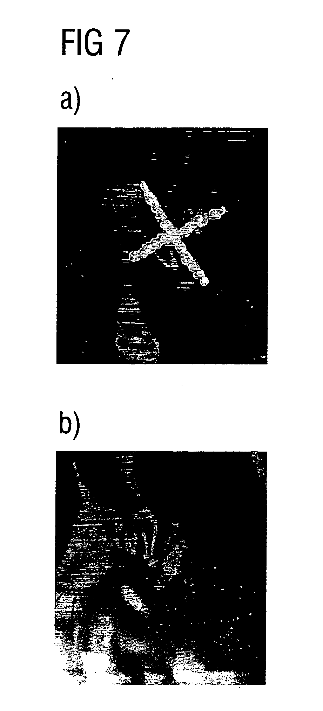

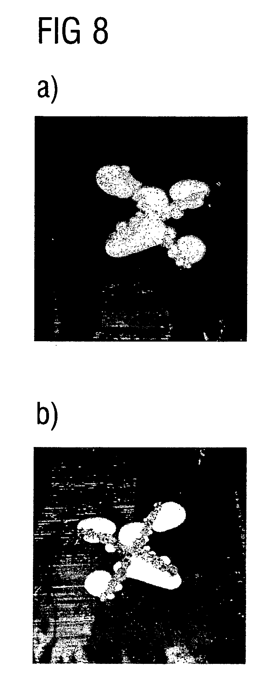

Bei 100 % rel. F. erfolgte eine Reaktion (vgl. Figuren 7 und 8). Bei Überschreiten von 92 % rel. F. hat das Natriumcarbonat eine basische Lösung gebildet, die bei Kontakt die Aluminiumschicht aufgelöst hat. Die Folie mit der Beschichtung Wachs mit Kaliumcarbonat wurde bei 0 % rel. F. und 50 % rel. F. für 2 Tage bei 23 °C gelagert.

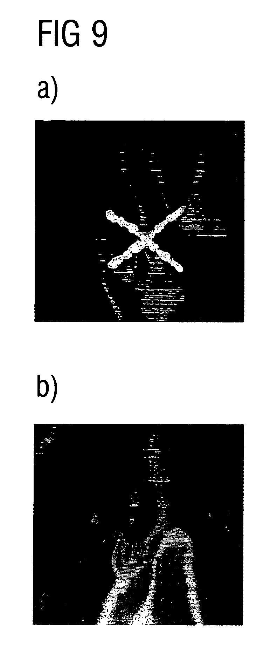

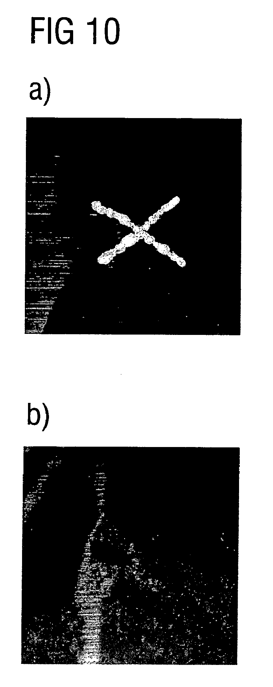

Bei 0 % rel. F. erfolgte keine Reaktion (vgl. Figuren 9 und 10).

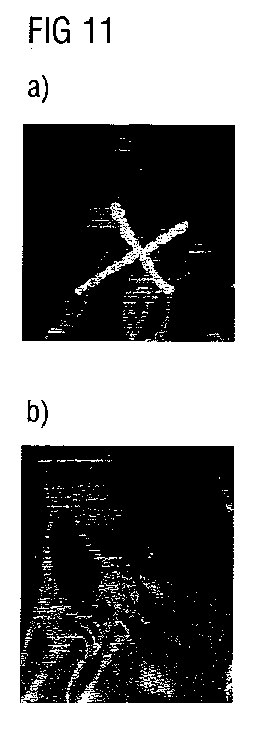

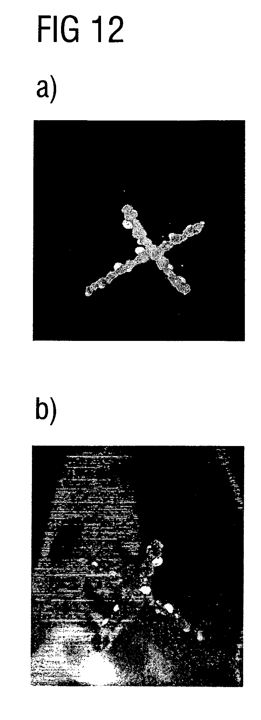

Bei 50 % rel. F. erfolgte eine Reaktion (vgl. Figuren 11 und 12). Bei Überschreiten von 42 % rel. F. hat das Kaliumcarbonat eine basische Lösung gebildet, die bei Kontakt die Aluminiumschicht aufgelöst hat.

In den Figuren 5 bis 12 sind die Ergebnisse der Untersuchung der derart hergestellten Folien wiedergegeben.

## Patentansprüche

1. Feuchteindikator, enthaltend
a) mindestens eine deliqueszente Substanz, die beim Überschreiten ihres Deliqueszenzpunktes eine Lösung bildet, sowie
b) mindestens ein Metall und/oder mindestens ein Halbmetall, das mit der aus der deliqueszenten Substanz gebildeten Lösung unter Bildung einer Substanz, die eine andere Farbe als das Metall bzw. das Halbmetall aufweist und/oder zumindest teilweise transparent ist, reagiert,
jedoch keinen Komplexbildner.

2. Feuchteindikator nach Anspruch 1, **dadurch gekennzeichnet, dass** die deliqueszente Substanz ausgewählt ist aus der Gruppe bestehend aus Metalloxiden, Metallhydroxiden, Metallacetaten, Metallhalogeniden, Metallhalogenaten, Metallhydrogensulfaten, Metallsulfaten, Metall(di)-hydrogenphosphaten, Metallnitraten, Metallcyanaten, Metallchromaten, Metallnitriten, Metallhydrogencarbonaten, Metallcarbonaten, wobei die Metallionen auch ganz oder teilweise durch Ammoniumionen ersetzt sein können, Zuckern und/oder Kombinationen hieraus.

3. Feuchteindikator nach einem der vorhergehenden Ansprüche, **dadurch gekennzeichnet, dass** das Metall und/oder das Halbmetall ausgewählt ist aus der Gruppe bestehend aus Aluminium, Antimon, Arsen, Blei, Bor, Cadmium, Cer, Chrom, Cobalt, Eisen, Germanium, Kupfer, Silber, Indium, Iridium, Mangan, Magnesium, Molybdän, Nickel, Niob, Platin, Selen, Tantal, Tellur, Yttrium, Vanadium, Wismut, Wolfram, Zinn, Zink und/oder Kombinationen hieraus.

4. Feuchteindikator nach einem der vorhergehenden Ansprüche, **dadurch gekennzeichnet, dass** die mindestens eine deliqueszente Substanz stoffschlüssig mit dem mindestens einen Metall und/oder Halbmetall in Kontakt steht.

5. Feuchteindikator nach einem der vorhergehenden Ansprüche, **dadurch gekennzeichnet, dass** die mindestens eine deliqueszente Substanz und das mindestens eine Metall und/oder das Halbmetall auf einem transparenten Trägersubstrat aufgebracht sind, das vorzugsweise eine Kunststofffolie ist.

6. Feuchteindikator nach vorhergehendem Anspruch, **dadurch gekennzeichnet, dass** das mindestens eine Metall und/oder das Halbmetall in Form einer Metall- und/oder Halbmetallbeschichtung auf zumindest einem Teil der Oberfläche des transparenten Trägersubstrats und die mindestens eine deliqueszente Substanz in Form einer Schicht auf der dem Trägersubstrat abgewandten Seite auf zumindest einem Teil der Oberfläche der Metall- und/oder Halbmetallbeschichtung aufgebracht ist.

7. Feuchteindikator nach vorhergehendem Anspruch, **dadurch gekennzeichnet, dass** die Metall- und/oder Halbmetallbeschichtung eine Dicke zwischen 1 und 500 nm, bevorzugt zwischen 10 und 250 nm, besonders bevorzugt zwischen 40 und 100 nm aufweist.

8. Feuchteindikator nach einem der Ansprüche 6 bis 7, **dadurch gekennzeichnet, dass** zumindest auf einem Teil der der Metall- und/oder Halbmetallschicht abgewandeten Seite der Schicht der deliqueszenten Substanz eine mindestens einen Farbstoff enthaltende Schicht aufgebracht ist.

9. Feuchteindikator nach Anspruch 5, **dadurch gekennzeichnet, dass** das mindestens eine Metall und/oder Halbmetall in Form von Metall- und/oder Halbmetallpartikeln und/oder Metall- und/oder Halbmetallplättchen zusammen mit der mindestens einen deliqueszenten Substanz in einer einzigen Schicht auf zumindest einem Teil der Oberfläche des transparenten Trägersubstrats aufgebracht sind.

10. Feuchteindikator nach vorhergehendem Anspruch,
**dadurch gekennzeichnet, dass** die das Metall und/oder das Halbmetall und die deliqueszente Substanz enthaltende Schicht mindestens ein Bindemittel enthält, wobei das Bindemittel bevorzugt ausgewählt ist aus der Gruppe bestehend aus Einkomponenten-Klebstoffen und/oder -Lacken; Zweikomponentenklebstoffen- und/oder -Lacken; UV-, chemisch und/oder thermisch härtbaren Klebstoffen und/oder Lacken, Hotmelts, Silikonen, Polyurethanen, Polyestern, Phenol-Formaldehydharzen, Kautschuken, Epoxiden und/oder Kombinationen hieraus.

11. Feuchteindikator nach einem der beiden vorhergehenden Ansprüche, **dadurch gekennzeichnet, dass** zumindest auf einem Teil der dem Trägersubstrat abgewandeten Seite, das mindestens eine Metall und/oder Halbmetall und die mindestens eine deliqueszente Substanz enthaltenden Schicht eine mindestens einen Farbstoff enthaltende Schicht aufgebracht ist.

12. Feuchteindikator nach Anspruch 5, **dadurch gekennzeichnet, dass** auf dem Trägersubstrat zumindest teilweise eine mindestens einen Farbstoff enthaltende Schicht sowie darauf zumindest teilweise eine einzige, das mindestens eine Metall und/oder Halbmetall in Form von Metall- und/oder Halbmetallpartikeln und/oder Metall- und/oder Halbmetallplättchen zusammen mit der mindestens einen deliqueszenten Substanz enthaltende Schicht aufgebracht ist.

13. Feuchteindikator nach einem der Ansprüche 5 bis 12, **dadurch gekennzeichnet, dass** als abschließende Beschichtung auf der Trägersubstrat abgewandten Seite eine Kunststofffolie aufgebracht ist.

14. Verwendung eines Feuchteindikators nach einem der vorhergehenden Ansprüche als Feuchteindikator, Sicherheitsmerkmal und/oder als graphisches Element.
